# EUROPÄISCHE PATENTSCHRIFT

(11) **EP 2 638 359 B1**
(45) Veröffentlichungstag und Bekanntmachung des Hinweises auf die Patenterteilung: **04.01.2017**
(21) Anmeldenummer: 11785369.7
(22) Anmeldetag: 08.11.2011
(51) Int. Cl.: G01C 15/00

(54) **KONSTRUKTIONSLASERSYSTEM AUS EINEM ROTATIONSLASER UND EINEM LASEREMPFÄNGER UND VERFAHREN**
CONSTRUCTION LASER SYSTEM COMPRISING A ROTATION LASER AND A LASER RECEIVER, AND METHOD
SYSTÈME À LASER POUR LA CONSTRUCTION, CONSTITUÉ D'UN LASER ROTATIF ET D'UN RÉCEPTEUR DE LASER ET PROCÉDÉ ASSOCIÉ

(30) Priorität: 10.11.2010 EP 10190617
(43) Veröffentlichungstag der Anmeldung: 18.09.2013
(73) Patentinhaber: Leica Geosystems AG, 9435 Heerbrugg (CH)
(72) Erfinder: KEHL, Anton, 9453 Eichberg (CH); STÖCKEL, Bernd, 9445 Rebstein (CH); WINISTÖRFER, Martin, CH-9452 Hinterforst (CH)
(74) Vertreter: Kaminski Harmann
(86) Internationale Anmeldenummer: PCT/EP2011/069635
(87) Internationale Veröffentlichungsnummer: WO 2012/062746

(56) Entgegenhaltungen:
- EP-A1- 1 524 497
- DE-T2- 69 928 203
- US-A- 6 052 181

## Beschreibung

Die Erfindung betrifft ein Konstruktionslasersystem aus einem Rotationslaser und einem Laserempfänger gemäss dem Oberbegriff des Anspruchs 1, einen Rotationslaser und einen Laserempfänger für ein solches System nach den Oberbegriffen der Ansprüche 11 bzw. 12, sowie ein Verfahren zum Bestimmen einer Position von einem Laserempfänger relativ zu einer - durch einen rotierenden Laserstrahl definierten - Referenzfläche nach dem Oberbegriff des Anspruchs 13.

Es ist bekannt, an Baustellen z.B. von Gebäuden Konstruktionslaser (auch Rotationslaser genannt) einzusetzen, um insbesondere bei Innenausbauarbeiten wie Installationen von Rohr- und Stromleitungen oder Fenstern, dem Aufstellen von Möbeln, dem Aufhängen von Bildern usw., Bezugspunkte und Bezugslinien an Flächen wie z.B. Wänden, Böden oder Decken zu definieren. Insbesondere werden Rotationslaser eingesetzt, in denen ein durch eine Lasereinheit emittierter Laserstrahl (im sichtbaren oder infraroten Wellenlängenbereich) durch Ablenkung über ein rotierendes Umlenkprisma eine Bezugsfläche erzeugt, durch die dann eine präzise Höhenreferenz bereitgestellt wird. Wird dabei ein Laserstrahl im sichtbaren Spektrum ausgesendet und trifft dieser rotierende Laserstrahl dabei auf eine Fläche wie z.B. eine Wand, einen Boden oder eine Decke des Gebäudes, ist dort eine Bezugslinie als Basis für weitere Maßnahmen sichtbar.

Zum präzisen Übertragen der durch die Laserfläche angegebenen Bezugshöhe z.B. auf eine Wand sind handhaltbare Laserempfänger bekannt, die eine Position relativ zu einer Referenzfläche hochgenau bestimmen und indizieren können.

Aus dem Stand der Technik bekannte handhaltbare Laserempfänger zur Bestimmung einer Position relativ zur Referenzfläche können dabei einen eine Vielzahl von photosensitiven Elementen umfassenden Laserstrahl-Detektor aufweisen, der zur Erzeugung eines Ausgangssignals bei Auftreffen des Laserstrahls auf dem Laserstrahl-Detektor ausgebildet ist. Im Detail ist dabei der Laserstrahl-Detektor so ausgebildet, dass zudem eine Auftreffposition des Laserstrahls auf der Laserstrahl-Detektor-Fläche abgeleitet werden kann, wofür die photosensitiven Elemente - betrachtet in aufrechter Betriebsstellung des Geräts - in einer vertikal ausgerichteten Sensorzeile aneinander gereiht sein können. Zudem sind meistens eine Auswerteeinheit zur Ermittlung der Position des Laserempfängers relativ zur durch den rotierenden Laserstrahl definierten Referenzhöhe anhand des Outputs des Laserstrahl-Detektors sowie ein Indikator für die ermittelte Position (etwa eine visuelle Anzeige), insbesondere ausgebildet zur Indikation, ob der Laserempfänger mit der Referenzfläche exakt koinzidiert, in das Laserempfängergerät integriert. Die Position kann dabei beispielsweise anhand eines Verhältnisses von mehreren Ausgangssignalen bestimmt werden (z.B. als Mittelpunkt jenes Bereichs auf der Laserstrahl-Detektor-Fläche, der durch den Laserstrahl beleuchtet wird).

Derartige handhaltbare Laserempfänger können insbesondere dann zum Einsatz kommen, wenn die durch den rotierenden Laserstrahl an der Wand abgebildete Linie mit dem Auge nur schwer oder nicht präzise genug erkennbar ist. Dies ist z.B. der Fall etwa bei grösseren Entfernungen von Rotationslaser zur Wand (z.B. begründet auf eine Divergenz des Laserstrahls [-> abgebildete Linie wird zu breit] oder eine geringe Lichtleistung [-> abgebildete Linie wird zu schwach sichtbar], die insbesondere aus Augensicherheitsgründen so gesetzt werden) oder bei Verwendung von Laserlicht im nicht sichtbaren Wellenlängenbereich.

In solchen Fällen ist es anhand derartiger Laserempfänger nun ermöglicht, den Laserstrahl zu finden und die durch einen rotierenden Laserstrahl definierte Laserebene (bzw. Referenzhöhe) zu indizieren, abzulesen und die Höheninformation auf eine Wand zu übertragen. Beispielsweise kann - indiziert durch den Laserempfänger - eine entsprechende Markierung (wie ein Bleistiftstrich) in der Referenzhöhe an der Wand angebracht werden.

Dafür wird benutzerseitig der Laserempfänger beispielsweise in vertikaler Richtung suchend auf und ab bewegt und schliesslich in jene Position gebracht, in welcher der Indikator eine Koinzidenz mit der Referenzfläche anzeigt. Beispielsweise kann als Indikator eine visuelle Anzeige vorgesehen sein, die (etwa durch Leuchtpfeile oder unterschiedlichfarbene LEDs) darüber informiert, ob sich ein definierter Nullpunkt des Laserempfängers (z.B. ein Flächenmittelpunkt der Detektorfläche)
□ exakt auf Höhe der Referenzfläche,
□ oberhalb der Referenzfläche oder
□ unterhalb der Referenzfläche
   befindet.

Beispiele für solche Laserempfänger sind in den Druckschriften EP 2 199 739 A1 und US 4,240,208 geoffenbart.

Um dem Benutzer ein einfaches Übertragen der durch den Laserempfänger ermittelten und indizierten Referenzhöhe bereitzustellen, kann am Gehäuse des Laserempfängers in Höhe des definierten Nullpunkts eine Höhenmarke vorgesehen sein (z.B. eine Kerbe oder eine aufgedruckte Linie seitlich am Gehäuse).

Wie in der EP 2 199 739 A1 beschrieben kann der Laserempfänger auch derart selbst einen Laserfächersender aufweisen, dass in Höhe der durch den rotierenden Laserstrahl definierten und empfängerseitig detektierten Laserebene ein horizontaler Laserfächer seitlich ausgesendet wird. Somit erfolgt eine Verstärkung und/oder Weiterleitung der durch den rotierenden Laserstrahl definierten Höheninformation. Dadurch ist es möglich, scharfe und deutliche Bezugslinien z.B. an einer Wand zu erzeugen, obwohl der Rotationslaser selbst weit entfernt ist oder sich gar in einem anderen Raum befindet.

In der US 7,394,527 wird ein System aus Lasersender und Laserempfänger offenbart, wobei ein Abstand des Laserempfängers vom Lasersender ermittelt werden soll. Dazu wird vorgeschlagen, zwei zueinander parallele Laserstrahlen rotierend auszusenden und abhängig von Rotationsgeschwindigkeit und Zeitversatz der direkt nacheinander empfangenen Laserimpulse der beiden Laserstrahlen den Abstand zu ermitteln. Analog dazu könne - bei Vorhandensein von mehreren parallel zueinander versetzten Detektorstreifen seitens des Empfängers (mit genau bekanntem Parallelversatz der Detektorstreifen zueinander) - alternativ auch ein einziger Laserstrahl rotierend ausgesendet werden, wobei dann abhängig vom Zeitversatz der nacheinander durch die jeweiligen Detektorstreifen empfangenen Laserimpulse die Entfernung vom Empfänger zum Lasersender bestimmt wird.

In der US 5,953,108 ist ein System aus Rotationslaser und Laserempfänger offenbart, wobei der Laserstrahl mit einer ersten Geschwindigkeit rotiert, wenn keine Nachricht an den Laserempfänger übermittelt wird, und mit einer von der ersten Rotationsgeschwindigkeit verschiedenen, zweiten Geschwindigkeit rotiert, um dadurch eine vordefinierte Nachricht bzgl. eines Statuszustands des Rotationslasers (z.B. "schwache Batterie") zu übermitteln.

Bei allen zuvor beschriebenen Systemen kann es jedoch vorkommen, dass bei der Verwendung von mehr als einem Rotationslaser auf einer Baustelle der Laserempfänger einen Laserstrahl empfängt und erkennt, der von einem anderen als dem eigentlich vorgesehenen Rotationslaser ausgesendet wird. Daher besteht die Gefahr, dass durch den Laserempfänger eine falsche Bezugshöhe indiziert wird, diese falsche Bezugshöhe auf eine Wand übertragen wird und dadurch schliesslich eventuell sogar das gesamte Bauvorhaben (wie z.B. Einbau von Fenstern auf vorgegebener Raumhöhe) fehlerhaft ausgeführt wird.

Bekannt sind zudem Laserempfänger, die genau auf Rotationslaser mit gewissen Eigenschaften ausgelegt und abgestimmt sind und nur dann reagieren und die Höhe einer Laserebene letztendlich anzeigen, falls der die Laserebene erzeugende Rotationslaser gewisse Anforderungen erfüllt, z.B. falls die fixe Rotationsgeschwindigkeit des Rotationslasers innerhalb eines vorgegebenen Bereichs liegt, falls die Wellenlänge des Laserstrahls innerhalb eines gewissen Wellenlängenbereichs liegt oder falls der empfangene Laserstrahl mit einem definierten Modulationsschema moduliert ist. Eine Verwendung einer Gerätekombination aus Rotationslaser und Laserempfänger, welche jedoch nicht hardwareseitig bereits aufeinander ausgelegt und abgestimmt sind, wird dadurch jedoch verunmöglicht, auch wenn dies im Prinzip eine relativ einfache und eindeutige Zuordnung der Geräte auf einer Baustelle gewährleistet. Beispielsweise offenbart die US 6,052,181 ein System aus Rotationslaser und Laserempfänger, bei dem der durch den Rotationslaser ausgesendete Laserstrahl amplitudenmoduliert ist und einen aufmodulierten Identifizierungs-Datenstream und andere Benutzerdaten enthält. Der Laserempfänger demoduliert den empfangenen Laserstrahl sofort nach Auftreffen auf demselben und weist zur Auslesung der aufmodulierten Daten und somit zur Identifizierung bzw. Indizierung des Höhenlevels einen speziellen Detektor auf.

Ein sich im Stand der Technik herausstellendes Hauptproblem bei solchen vorab bereits genau aufeinander abgestimmten Gerätekombinationen liegt in der geringen Flexibilität beim Austausch von Empfänger oder Rotationslaser sowie in der geringen Modularität bzw. Kombinierbarkeit mit vergleichbaren Komponenten. Ein weiteres Problem ist die geringe kurzfristige Reaktionsmöglichkeit auf bestimmte Gegebenheiten z.B. auf einer Baustelle vor Ort.

Aufgabe der Erfindung ist deshalb die genannten Probleme zu vermindern oder zu beheben. Eine spezielle Aufgabe ist es, eine derartige Gerätekombination bzw. die Einzelkomponenten dafür bereitzustellen, bei welcher die einzelnen Komponenten (nämlich Laserempfänger und Rotationslaser) auch auf einfache Weise mit weiteren, ähnlichen gattungsgemässen Einzelkomponenten kombinierbar und erweiterbar sind, und wobei dennoch eine zuverlässige Identifikation der einzelnen Komponenten untereinander bei Gebrauch derselben ermöglicht wird. Im Speziellen soll dabei auf einfache Weise ermöglicht werden, erst kurz vor Einsatz der Geräte diese auf benutzerfreundliche Weise gegenseitig aufeinander einzustimmen (d.h. eine eindeutige Zusammenarbeit der Gerätekombination zu bewirken), ohne dass dafür eine vordefinierte und Modularität verunmöglichende hardwareseitige Abstimmung diverser Bauteile der beiden zusammenwirkenden Geräte aufeinander erforderlich ist (z.B. hinsichtlich der Wellenlänge oder der Modulationsweise des Laserstrahls mit entsprechender hardwareseitiger Auslegung der senderseitigen Laserquelle bzw. des empfängerseitigen Laserstrahl-Detektors).

Im Allgemeinen betrachtet besteht also Bedarf an einem verbesserten Konstruktionslasersystem aus einem Rotationslaser und einem Laserempfänger, wobei der Laserempfänger auf flexiblere, kurzfristig an äussere Gegebenheiten anpassbare und weniger aufwändige Weise in der Lage ist, eine durch den Rotationslaser erzeugte Laserebene zuverlässig und robust zu identifizieren, auch bei Vorhandensein von empfangbaren Stör-Laserstrahlen oder von mehreren empfangbareren Referenzflächen, die z.B. durch weitere auf der Baustelle aufgestellte Rotationslaser erzeugt werden. Eine weitere Aufgabe ist das Bereitstellen eines entsprechenden Verfahrens zum zuverlässigen und robusten Bestimmen einer Position von Laserempfänger relativ zu einer gewünschten Referenzfläche, auch bei Vorhandensein von empfangbaren Stör-Laserstrahlen oder von mehreren empfangbareren Referenzflächen, die z.B. durch weitere auf der Baustelle aufgestellte Rotationslaser erzeugt werden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Konstruktionslasersystem umfasst mindestens einen eine Lasereinheit und ein rotierbares Umlenkmittel aufweisenden Rotationslaser zur Emission eines rotierenden Laserstrahls, wobei der rotierende Laserstrahl eine Referenzfläche definiert, und einen Laserempfänger zur Bestimmung einer Position relativ zur Referenzfläche. Dabei weist der Laserempfänger einen Laserstrahl-Detektor auf, der ausgebildet ist zur Erzeugung eines Ausgangssignals bei Auftreffen des Laserstrahls auf dem Laserstrahl-Detektor. Zudem sind eine Auswerteeinheit zur Ermittlung der Position des Laserempfängers relativ zur Referenzfläche sowie ein Indikator für die ermittelte Position, insbesondere ausgebildet zur Indikation, ob der Laserempfänger mit der Referenzfläche exakt koinzidiert, vorhanden.

Die Erfindung löst sich dabei vom Stand der Technik, indem der Rotationslaser und der Laserreceiver derart ausgebildet und aufeinander abstimmbar sind, dass die erzeugte Referenzfläche aus einer Menge von laserreceiverseitig empfangbaren Lichtstrahlen (insbesondere aus weiteren erzeugten Referenzflächen) heraus eindeutig als diese identifiziert werden kann. Im Einzelnen wird dies erreicht, indem das Emittieren des rotierenden Laserstrahls derart variiert wird, dass dadurch zumindest in Richtung des Laserempfängers ein bekanntes Emissionsmuster über eine Folge von Umdrehungen des rotierenden Laserstrahls erzeugt wird, und ein Identifizieren der Referenzfläche erfolgt anhand einer mit dem bekannten Emissionsmuster korrespondierenden Folge von durch den Laserstrahl-Detektor jeweils bei mehrmalig nacheinander erfolgendem Auftreffen des rotierenden Laserstrahls erzeugten Ausgangssignalen. Strukturell betrachtet ist - rotationslaserseitig - dafür eine derart ausgebildete Steuerung für die Lasereinheit des Rotationslasers vorgesehen, dass durch eine zeitlich mit der Umdrehungsdauer des Umlenkmittels gekoppelte Variation der Emission des Laserstrahls ein bekanntes Emissionsmuster über eine Folge von mehreren Umdrehungen erzeugt wird. Die Steuerung kann dabei vorteilhaft in den Rotationslaser (d.h. das Rotationslasergerät) integriert sein. Die Identifikation der Referenzfläche erfolgt anhand der Auswerteeinheit, die insbesondere in den Laserempfänger integriert ist, anhand einer Folge von Ausgangssignalen, die durch den Laserstrahl-Detektor jeweils bei mehrmalig nacheinander erfolgendem Auftreffen des rotierenden Laserstrahls erzeugt werden, wobei z.B. an dieser Folge von Ausgangssignalen Kriterien erkannt werden, die mit dem bekannten Emissionsmuster korrespondieren.

Der von dem Rotationslaser ausgesendete rotierende Laserstrahl fällt dabei immer nur kurzzeitig in Form von Laserimpulsen auf den Laserlichtsensor des Laserempfängers, sodass die Ausgangssignale als elektrische Ausspeisungen entsprechend dem Einfallen des Laserstrahls erzeugt werden. Da die elektrischen Ausspeisungen ein Muster bilden, das dem Muster gleicht, mit dem der Laserstrahl auf den Empfänger fällt, kann diese Muster weiter verarbeitet, das heißt, es kann erfasst und mit einem gespeicherten Mustern verglichen werden. Wenn die beiden Muster einander gleichen, stellt der Laserempfänger fest, dass der Laserimpuls von dem zugeordneten Rotationslaser stammt und ermöglicht die Durchführung weiterer Verfahrensschritte.

Der rotierende Laserstrahl trifft also in einem von der Umdrehungsdauer des Umlenkmittels abhängigen Auftreff-Rhythmus auf dem Laserempfänger auf. Vorteilhaft kann durch die Steuerung die Emission des Laserstrahls nun derart variiert werden, dass - als das bekannte Emissionsmuster - im Rahmen des Auftreff-Rhythmus bei jedem n-ten Auftreffen des rotierenden Laserstrahls auf dem Laserempfänger ein Ausgangssignal durch den Laserstrahl-Detektor erzeugt wird, welches sich von den im Rahmen des Auftreff-Rhythmus restlichen erzeugten Ausgangssignalen unterscheidet.

Im Speziellen ist die Auswerteeinheit dabei zum Vergleich von der Folge von erzeugten Ausgangssignalen mit durch das bekannte Emissionsmuster gekennzeichneten Vergleichskriterien ausgebildet, insbesondere wobei die Vergleichskriterien - die mit dem bekannten Emissionsmuster korrespondieren - vorab bereits in der Auswerteeinheit gespeichert sind und dadurch der Rotationslaser und der Laserreceiver aufeinander abgestimmt sind. Es können jedoch auch eine Mehrzahl von mit unterschiedlichen Emissionsmustern korrespondierenden Schemen für Vergleichskriterien vorab gespeichert sein und - abhängig von der gesuchten Referenzfläche (bzw. der durch den entsprechenden Rotationslaser bereitgestellten, gewünschten Referenzhöhe) eine benutzerseitige Auswahlfunktion für die entsprechenden, mit dem Emissionsmuster der gesuchten Referenzfläche korrespondierenden Vergleichskriterien vorgesehen sein, sodass der Benutzer vorab eingeben und wählen kann, welche Referenzfläche bzw. Referenzhöhe (von welchem Rotationslaser) anhand des Laserreceivers nun gefunden bzw. indiziert werden soll.

Zur Erzielung des oben beschriebenen Effekts, dass im Rahmen des Auftreff-Rhythmus jedes n-te empfängerseitig erzeugte Ausgangssignal sich von den restlichen im Rahmen des Auftreff-Rhythmus erzeugten Ausgangssignalen unterscheidet, kann die Steuerung insbesondere derart ausgebildet sein, dass - als das bekannte Emissionsmuster - der Laserstrahl bei jeder n-ten Umdrehung für die Dauer von einer Umdrehung mit einer ausserhalb eines definierten Standardlichtleistungsbereichs liegenden Lichtleistung emittiert wird oder gar nicht (d.h. mit einer Lichtleistung von null) emittiert wird, wobei n ganzzahlig zwischen 3 und 10 gewählt sein kann.

Mit anderen Worten kann also der Rotationslaser ausgelegt sein, das Emissionsmuster des von dem Rotationslaser in Richtung des Laserempfängers abgegebenen rotierenden Laserstrahls durch Folgen von gleichmäßig abgegebenen Laserimpulsen auszubilden, von denen mindestens ein Laserimpuls (z.B. jeder n-te) verändert ist.

Für den Fall, dass der Laserstrahl bei jeder n-ten Umdrehung mit einer ausserhalb des Standardlichtleistungsbereichs liegenden Lichtleistung emittiert wird, kann dieser bei jeder n-ten Umdrehung vorteilhaft mit einer den Standardlichtleistungsbereich deutlich unterschreitenden Lichtleistung emittiert werden.

Weiters kann die Steuerung dabei derart ausgebildet sein, dass der Laserstrahl bei den sonstigen Umdrehungen ausser bei der jeden n-ten Umdrehung - d.h. für die Dauer von diesen sonstigen Umdrehung - mit einer innerhalb des Standardlichtleistungsbereichs liegenden Lichtleistung emittiert wird, insbesondere wobei der Laserstrahl bei den sonstigen Umdrehungen mit konstanter Lichtleistung als Standardlichtleistung emittiert wird.

Gekoppelt mit der beschriebenen rotationslaserseitigen Steuerung der Emission des rotierenden Lichtstrahls kann laserreceiverseitig die Auswerteeinheit nun die Referenzfläche daran erkennen und identifizieren (sowie dafür programmatisch zur Identifikation anhand des folgenden Aspekts ausgelegt sein), dass bei der Folge von Ausgangssignalen jedes n-te Ausgangssignal eine sich von den Amplituden der sonstigen Ausgangssignale unterscheidende Amplitude aufweist bzw. dass bei der Folge von Ausgangssignalen jedes n-te Ausgangssignal ausbleibt (letzteres gilt für den Fall, dass der Laserstrahl bei jeder n-ten Umdrehung gar nicht - d.h. mit einer Lichtleistung von null - oder zumindest nicht messbar anhand des Laserstrahl-Detektors emittiert wird).

Beispielsweise kann der rotierende Laserstrahl auch mit zumindest einer ersten, im sichtbaren Bereich liegenden und einer zweiten, im unsichtbaren Bereich (z.B. im Infraroten) liegenden Wellenlänge emittiert werden, wobei sich die erfindungsgemässe Steuerung der Emission und Erzeugung des Emissionsmustern lediglich auf die zweite, im unsichtbaren Bereich liegende Teilemission des Laserstrahls bezieht.

Dadurch kann erreicht werden, dass der an der Wand entlang laufende Projektionspunkt des rotierenden Laserstrahls - trotz variierender Emission und Erzeugung des Emissionsmusters - gleichmässig ununterbrochen für das menschliche Auge sichtbar bleibt. Dennoch kann laserreceiverseitig eine eindeutige Identifikation der durch den variierend ausgesendeten rotierenden Laserstrahl erzeugten Referenzfläche erfindungsgemäss gewährleistet werden, indem jene Folge von Ausgangssignalen ausgewertet wird, welche bei Auftreffen der im zweiten, unsichtbaren Wellenlängenbereich liegenden Laserstrahlanteile generiert werden.

Mit anderen Worten kann also der Rotationslaser ausgelegt sein, das Emissionsmuster des von dem Rotationslaser in Richtung des Laserempfängers abgegebenen rotierenden Laserstrahls durch Folgen von gleichmäßig abgegebener Laserimpulse auszubilden, von denen mindestens ein Laserimpuls - insbesondere hinsichtlich dessen Intensität - verändert ist. Durch das Verändern eines Laserimpulses ist es einfach, eine Vielzahl von möglichen, eindeutig unterscheidbaren Mustern herzustellen, was eine einfache Zuordnung des jeweiligen Musters zu einem bestimmten Rotationslaser ermöglicht. Des Weiteren kann der Rotationslaser dafür ausgelegt sein, den mindestens einen veränderten Laserimpuls vollständig zu unterdrücken, oder den mindestens einen veränderten Laserimpuls mit einer von den übrigen Laserimpulsen unterschiedlichen Signalamplitude auszusenden. Dabei ist es möglich, einen Laserimpuls vollkommen ausfallen zu lassen, indem z.B. der Laserstrahl während jeder n-ten Umdrehung des Umlenkprismas abgeschaltet oder durch eine Abdeckung unterbrochen wird. Aufgrund der üblichen Drehzahlen kann n beispielsweise 5 betragen, d.h. jeder 5. Impuls kann ausfallen, um ein eindeutiges Muster zu erzeugen. Alternativ kann auch die Signalamplitude des Laserstrahls z.B. um 25%, 50%, oder 75% bei jeder n-ten Umdrehung verringert oder sogar verstärkt werden.

Wird beispielsweise bei jeder dritten oder fünften Umdrehung die Intensität des rotierenden Laserstrahls z.B. für eine oder zwei Umdrehungen herabgesetzt, so trifft entsprechend auf dem Empfänger auch eine Folgen von Luchtimpulsen auf, deren Amplituden mit der Variation der Intensität des rotierenden Laserstrahls korrespondieren. D.h., dass anhand der variierenden Amplituden der empfangenen Luchtimpulse (bzw. der daraus erzeugten Ausgangssignale) dann ein kodiertes Emissionsmuster empfängerseitig wiedererkenn- und identifizierbar ist. Wird rein beispielhaft der Laserstrahl mit einem fortlaufenden Emissionsmuster von vier Umdrehungen mit der Intensität von 1 (normiert als Standardlichtleistung) und eine Umdrehung mit der Intensität von 0.25 (also 25% von der Standardlichtleistung) ausgesendet, so kann dieses definierte Emissionsmuster in der Folge von receiverseitig auftreffenden Lichtimpulsen (bzw. daraus generierten Ausgangssignalen) wieder erkannt werden dadurch, dass - betrachtet im Rahmen von fünf aufeinander folgenden Lichtimpulsen (bzw. Ausgangssignalen) - die Amplitude von einem der fünf Lichtimpulse (bzw. Ausgangssignale) deutlich unterhalb der Amplitude der restlichen vier Lichtimpulse (bzw. Ausgangssignale) liegt. Anhand von der Folge von den receiverseitig auftreffenden Lichtimpulsen (bzw. den generierten Ausgangssignalen) kann also das bekannte Emissionsmuster mit fortlaufend variierender Intensität auf einfache Weise durch Vergleich mit entsprechenden, definierten Kriterien hinsichtlich der Amplituden der Lichtimpulse bzw. Ausgangssignale (als korrespondierende Vergleichskriterien) identifiziert werden.

Gemäss eines weiteren Aspekts kann insbesondere zudem die Umdrehungsrate des Umlenkmittels wahlweise auf verschiedene fixe Werte innerhalb eines Drehratenbereichs zwischen beispielsweise 7 und 20 Umdrehungen pro Sekunde (insbesondere 7 bis 13 Umdrehungen pro Sekunde) einstellbar sein, sowie die Auswerteeinheit dabei ausgebildet sein zur weiteren Identifikation der Referenzfläche zusätzlich anhand der Zeitabstände der einzelnen Ausgangssignale innerhalb der Folge von erzeugten Ausgangssignalen. Die Ausgangssignale bilden dabei die abhängig vom Auftreffen eines Laserstrahls (sowie dessen Auftreffpunktes bzw. dessen Auftreffteilfläche auf der Detektorfläche) generierte elektrische Ausspeisung des Laserstrahl-Detektors.

Vorteilhaft kann der Rotationslaser also auch ausgelegt sein, durch eine zusätzliche Änderung einer Drehzahl seines Umlenkprismas das Muster als eine vorbestimmte Anzahl von Laserimpulsen in Richtung des Laserempfängers durch den rotierenden Laserstrahl innerhalb eines vorbestimmten Zeitraums auszusenden. Damit ist es möglich, obwohl durch unterschiedliche Rotationslaser das gleiche Muster ausgesendet werden kann, durch eine einfache Änderung der Drehzahl des Rotationslasers diesen eindeutig zu bestimmen.

Des Weiteren kann als bekanntes Emissionsmuster alternativ oder zusätzlich zu der - über eine Folge von Umdrehungen erfolgenden - Variation der Intensität des emittierten rotierenden Laserstrahls auch die Umdrehungsgeschwindigkeit des rotierenden Laserstrahls über eine Folge von Umdrehungen als bekanntes Emissionsmuster variiert werden. Wird beispielsweise bei jeder dritten oder fünften Umdrehung die Umdrehungsgeschwindigkeit z.B. für eine oder zwei Umdrehungen erhöht, so trifft entsprechend auf dem Empfänger auch eine Folgen von Luchtimpulsen auf, deren Zeitabstände mit der Variation der Umdrehungsgeschwindigkeit korrespondieren. D.h., dass anhand des variierenden zeitlichen Abstands der empfangenen Luchtimpulse (bzw. der daraus erzeugten Ausgangssignale) dann ein kodiertes Emissionsmuster empfängerseitig wiedererkenn- und identifizierbar ist. Wird rein beispielhaft der Laserstrahl mit einem fortlaufenden Emissionsmuster von drei Umdrehungen mit der Umdrehungsgeschwindigkeit von 10 U/s und zwei Umdrehungen mit der Umdrehungsgeschwindigkeit von 15 U/s ausgesendet, so kann dieses definierte Emissionsmuster in der Folge von receiverseitig auftreffenden Lichtimpulsen (bzw. daraus generierten Ausgangssignalen) wieder erkannt werden dadurch, dass - betrachtet im Rahmen von sechs aufeinander folgenden Lichtimpulsen (bzw. Ausgangssignalen) - zwei der Zeitabstände zwischen den jeweils benachbarten Lichtimpulsen (bzw. Ausgangssignalen) 10 ms betragen, einer der Zeitabstände 6.66 ms beträgt und die restlichen zwei der Zeitabstände irgendwo zwischen 6.66 ms und 10 ms - in Summe jedenfalls bei 16.66 ms - liegen (je nach Lage des Laserempfängers relativ zum Rotationslaser bzw. je nach dem, an welcher Winkelstellung die Rotationsgeschwindigkeitssteigerung und -herabsetzung jeweils erfolgt). Anhand von der Folge von den receiverseitig auftreffenden Lichtimpulsen (bzw. den generierten Ausgangssignalen) kann also das bekannte Emissionsmuster mit fortlaufend variierender Rotationsgeschwindigkeit auf einfache Weise durch Vergleich mit entsprechenden, definierten Kriterien hinsichtlich der Zeitabstände zwischen den Lichtimpulsen bzw. Ausgangssignalen (als korrespondierende Vergleichskriterien) identifiziert werden.

In diesem Zusammenhang sei auch erwähnt, dass die Erfindung grundsätzlich auch für ein System aus mehr als einem Rotationslaser und/oder mehr als einem Empfänger geeignet sein kann, wenn in dem Empfänger bzw. den Empfängern verschiedene Muster bzw. deren korrespondierende, anzuwendende Vergleichskriterien gespeichert sind. Da bei einer Drehzahl eines Umlenkprismas von 10 U/s ein Impulsabstand im Bereich einer Zehntelsekunde liegt, während eine Impulsdauer ca. 5µs beträgt, sind die einzelnen Impulse verschiedener Rotationslaser, die zu unterschiedlichen Zeitpunkten einfallen, ohne die Anwendung von komplizierten Schaltkreisanordnungen einfach unterscheidbar.

Vorteilhaft kann der Rotationslaser Mittel zum Einstellen eines bestimmten Musters aufweisen, das von dem Rotationslaser ausgesendet wird. Ebenfalls kann dann der Laserempfänger Mittel zum Einstellen des bestimmten Musters aufweisen, wodurch die als Vergleichs- und Zuordnungseinrichtung fungierende Auswerteeinheit in der Lage ist, das bestimmte Muster zu erkennen und dem Rotationslaser zuzuordnen.

Zudem kann der Laserempfänger insbesondere - wie untenstehend näher erläutert - auch eine Lernfunktion aufweisen, um ein von dem Rotationslaser erstelltes Muster als Bezugsmuster zu lernen und zu speichern.

Beispielsweise kann vorgesehen sein, über Schalter an dem Rotationslaser und dem Laserempfänger unterschiedliche Muster einzustellen. Es ist aber auch möglich, dass der Rotationslaser grundsätzlich nur ein individuelles Muster erstellen kann, und dann der Laserempfänger auf dieses individuelle Muster eingestellt wird. Denkbar ist aber auch, dass das einstellbare oder fest verfügbare Muster des Rotationslasers über Kabel oder in einer drahtlosen Weise zu dem Laserempfänger übertragen wird, der dieses Muster als Bezugsmuster lernt, bevor die Geräte verwendet werden. Dabei kann eine Übertragung des Musters auch in einer kodierten Weise erfolgen. Das jeweils an dem Laserempfänger eingestellte Muster bzw. das zu diesem übertragene Muster entspricht dann dem gespeicherten Muster, das während des Arbeitens mit dem Laserempfänger mit dem dann erfassten Muster verglichen wird.

Mittel zum Einstellen können aber auch Speicherkarten wie z.B. Compact-Flash-Karten, SD-Karten oder USB-Sticks sein, auf denen ein Muster gespeichert ist. Die Speicherkarten können vor dem Betrieb des Systems in den Rotationslaser und den Laserempfänger eingelegt werden. Ebenfalls können Übertragungen vom Rotationslaser zum Laserempfänger über Kabel oder auch drahtlose Lösungen wie WLAN, Bluetooth, Infrarot oder Funk in Betracht kommen.

Außerdem ist es auch möglich, dem Rotationslaser mehr als einen Laserempfänger zuzuordnen, da ja das Muster durch die Drehzahl des Umlenkprismas und das Verändern des Laserstrahls während einer Umdrehung des Umlenkprismas definiert sein kann. Somit kann dasselbe Muster in alle Richtungen eines 360° Vollkreises ausgesendet werden und eine beliebige Anzahl von Laserempfängern kann dasselbe Muster erkennen.

Durch das zusätzliche Kriterium der verschieden einstellbaren Umdrehungsrate bzw. Umdrehungsdauer kann die Referenzfläche gegebenenfalls noch zuverlässiger von anderen Referenzflächen oder von laserreceiverseitig empfangenen Stör-Laserstrahlen unterschieden werden und somit robuster identifiziert werden. Beispielsweise kann dies auch zum Hinzufügen von weiteren Differenzierungsmöglichkeiten für die Referenzflächen genutzt werden. So kann es im Rahmen eines Strassenbauprojekts beispielsweise vorkommen, dass im Gelände aufgestellt werden
- ein erster Rotationslaser zum Erzeugen einer ersten Referenzebene in einer ersten Höhe, die für die Erdbegradigungsmaschinen und für den Bau der Strassen benötigt wird,
- ein zweiter Rotationslaser zum Erzeugen einer zweiten Referenzebene in einer zweiter Höhe, die für die Asphaltwalzmaschinen und für den Bau der Strassen benötigt wird,
- ein dritter Rotationslaser zum Erzeugen einer dritten Referenzebene in einer dritten Höhe, die für die Erdbegradigungsmaschinen und für den Bau der Gehsteige benötigt wird,
- ein vierter Rotationslaser zum Erzeugen einer vierten Referenzebene in einer vierten Höhe, die für die Asphaltwalzmaschinen und für den Bau der Gehsteige benötigt wird.

Erfindungsgemäss können nun z.B. sämtliche auf einer Baustelle aufgestellten Rotationslaser, welche eine Höhe für das Fertigen der Strasse referenzieren sollen, auf eine Umdrehungsrate von 8 Umdrehungen pro Sekunde und weitere Rotationslaser, die eine Ausbauhöhe für den nebenliegenden Gehsteig referenzieren sollen, auf eine Umdrehungsrate von 12 Umdrehungen pro Sekunde eingestellt werden. Zusätzlich können für die unterschiedlichen Baumaschinen - je nach Art der Fertigungsmaschine - unterschiedliche Emissionsmuster erzeugt werden (z.B.: Referenzhöhe für Asphaltwalzmaschinen wird erzeugt mit einem Muster, bei welchem der rotierende Laserstrahl bei jeder 4-ten Umdrehung für die Dauer von einer Umdrehung mit einer deutlich herabgesetzten Lichtleistung emittiert wird, und Referenzhöhe für Erdbegradigungsmaschinen wird erzeugt mit einem Muster, bei welchem der rotierende Laserstrahl bei jeder 5-ten Umdrehung für die Dauer von einer Umdrehung mit einer deutlich herabgesetzten Lichtleistung emittiert wird).

Je nach Aufgabe der jeweiligen Maschinen im Gelände können diese nun mit entsprechenden Laserempfängern ausgestattet sein, die so eingestellt sind, dass diese jeweils nur auf die entsprechende gewünschte Sollreferenzebene reagieren und die weiteren Referenzebenen im Gelände ignorieren.

Erfindungsgemäss kann somit ein schnelles, zuverlässiges und robustes Auffinden und Indizieren der jeweils richtigen Referenzebene und Referenzhöhe gewährleistet werden.

Insbesondere für Innenausbauarbeiten kann der Laserempfänger dabei als handhaltbarer Laserempfänger ausgebildet sein. Die Auswerteeinheit und der Indikator können dabei in das Laserempfängergerät integriert sein. Anhand des Indikators kann z.B. die ermittelte Position des Laserempfängers relativ zur identifizierten Referenzfläche visuell angezeigt werden. Zusätzlich oder alternativ separat kann der Indikator des Laserempfängers dazu ausgebildet sein, um visuell anzuzeigen, ob eine momentan einfallende Referenzfläche als die gewünschte Referenzfläche identifiziert wurde.

Wie aus dem Stand der Technik bereits bekannt kann dabei als die Position des Laserempfängers relativ zur Referenzfläche durch die Auswerteeinheit die Information ermittelbar sein, ob sich ein definierter Nullpunkt des Laserempfängers
□ exakt auf Höhe der Referenzfläche,
□ oberhalb der Referenzfläche oder
□ unterhalb der Referenzfläche
befindet. Diese Information kann dann als die ermittelte Position durch den Indikator angezeigt werden. Wie ebenso dem Fachmann bekannt kann der Laserstrahl-Detektor beispielsweise eine Vielzahl von photosensitiven Elementen aufweisen.

Als weiteren erfindungsgemässen Aspekt kann eine Lernfunktionalität vorgesehen sein (z.B. programmatisch eingebettet in und somit bereitgestellt durch die Auswerteeinheit), mit der eine mit dem Emissionsmuster korrespondierende Einlern-Folge von durch den Laserstrahl-Detektor jeweils bei mehrmalig nacheinander erfolgendem Auftreffen des rotierenden Laserstrahls erzeugten Ausgangssignalen erfassbar und analysierbar ist und aus der Einlern-Folge Vergleichskriterien ableitbar sind, die durch das Emissionsmuster gekennzeichnet sind und zum Verglichenwerden mit einer Folge von im Rahmen eines späteren Messvorgangs erzeugten Ausgangssignalen ausgelegt sind.

Insbesondere können dabei - als die Vergleichskriterien - Informationen bezüglich periodisch wiederkehrender Unterschiede in den Amplituden der einzelnen Ausgangssignale innerhalb der Einlern-Folge abgeleitet und abgespeichert werden.

Zusammengefasst bietet also die erfindungsgemässe Gerätekombination aus Rotationslaser und Laserempfänger eine hohe Flexibilität auch bei - z.B. ausfallbedingt erforderlich werdendem - Ersatz von Empfänger oder Rotationslaser einer Gerätekombination sowie in der hohen Modularität bzw. Kombinierbarkeit/Erweiterbarkeit mit weiteren Komponenten anderer ähnlicher Gerätekombinationen, wobei dennoch eine eindeutige Zuordnungsmöglichkeit von jeweils zwei Komponenten bzw. die empfängerseitige Identifikation eines speziellen, ausgewählten Rotationslasers gewährleistet ist. Zudem kann erfindungsgemäss nun auch kurzfristig auf bestimmte Gegebenheiten (z.B. auf einer Baustelle vor Ort und die dort bereits vorhandenen und eingesetzten Gerätschaften) reagiert werden.

Im Speziellen wird also auf einfache Weise ermöglicht, erst kurz vor Einsatz der Geräte diese auf benutzerfreundliche Weise gegenseitig aufeinander einzustimmen (d.h. eine eindeutige Zusammenarbeit der Gerätekombination zu bewirken), ohne dass dafür eine vordefinierte und Modularität verunmöglichende hardwareseitige Abstimmung diverser Bauteile der beiden zusammenwirkenden Geräte aufeinander erforderlich ist (z.B. hinsichtlich der Wellenlänge oder der Modulationsweise des Laserstrahls mit entsprechender hardwareseitiger Auslegung der senderseitigen Laserquelle bzw. des empfängerseitigen Laserstrahl-Detektors).

Die Erfindung betrifft des Weiteren einen Rotationslaser für ein solches, zuvor beschriebenes Konstruktionslasersystem, der eine Lasereinheit und ein rotierbares Umlenkmittel aufweist und ausgebildet ist zur Emission eines rotierenden Laserstrahls, wobei der rotierende Laserstrahl eine Referenzfläche definiert. Dabei ist erfindungsgemäss eine derart ausgebildete Steuerung für die Lasereinheit vorgesehen, dass durch eine zeitlich mit der Umdrehungsdauer des Umlenkmittels gekoppelte Variation der Emission des Laserstrahls ein bekanntes Emissionsmuster über eine Folge von mehreren Umdrehungen erzeugt wird, sodass anhand einer mit dem bekannten Emissionsmuster korrespondierenden Folge von durch einen Laserstrahl-Detektor eines Laserempfängers jeweils bei mehrmalig nacheinander erfolgendem Auftreffen des rotierenden Laserstrahls erzeugten Ausgangssignalen die Referenzfläche durch eine Auswerteeinheit des Konstruktionslasersystems identifizierbar ist.

Des Weiteren betrifft die Erfindung auch einen Laserempfänger, insbesondere handhaltbar, für ein solches, zuvor beschriebenes Konstruktionslasersystem, der ausgebildet ist zur Bestimmung einer Position relativ zu einer durch einen rotierenden Laserstrahl definierten Referenzfläche und aufweist
- einen eine Vielzahl von photosensitiven Elementen aufweisenden Laserstrahl-Detektor, der ausgebildet ist zur Erzeugung eines Ausgangssignals bei Auftreffen des Laserstrahls auf dem Laserstrahl-Detektor,
- einer Auswerteeinheit zur Ermittlung der Position des Laserempfängers relativ zur Referenzfläche, und
- einen Indikator für die ermittelte Position, insbesondere ausgebildet zur Indikation, ob der Laserempfänger mit der Referenzfläche exakt koinzidiert.

Dabei ist erfindungsgemäss die Auswerteeinheit ausgebildet zur Identifikation der Referenzfläche anhand einer mit einem - durch Variation der Emission des rotierenden Laserstrahls über eine Folge von mehreren Umdrehungen erzeugten - bekannten Emissionsmuster korrespondierenden Folge von durch den Laserstrahl-Detektor jeweils bei mehrmalig nacheinander erfolgendem Auftreffen des rotierenden Laserstrahls erzeugten Ausgangssignalen.

Zudem betrifft die Erfindung ein Verfahren zum Bestimmen einer Position von einem Laserempfänger relativ zu einer Referenzfläche, insbesondere zum Indizieren, ob der Laserempfänger mit der Referenzfläche exakt koinzidiert.

Dabei sind die folgenden Schritte vorgesehen:
- Emittieren eines rotierenden Laserstrahls, wobei der rotierende Laserstrahl die Referenzfläche definiert,
- Detektieren des Laserstrahls anhand eines Laserstrahl-Detektors des Laserempfängers und Erzeugen eines Ausgangssignals bei Auftreffen des Laserstrahls auf dem Laserstrahl-Detektor,
- Ermitteln der Position des Laserempfängers relativ zur Referenzfläche, und
- Indizieren der ermittelten Position, insbesondere wobei indiziert wird, ob ein definierter Nullpunkt des Laserempfängers mit der Referenzebene koinzidiert,

Gemäss der Erfindung erfolgen im Rahmen des Verfahrens zusätzlich nun die folgenden Schritte:
- Variieren des Emittierens des rotierenden Laserstrahls derart, dass dadurch zumindest in Richtung des Laserempfängers ein bekanntes Emissionsmuster über eine Folge von Umdrehungen des rotierenden Laserstrahls erzeugt wird, und
- Identifizieren der Referenzfläche anhand einer mit dem bekannten Emissionsmuster korrespondierenden Folge von durch den Laserstrahl-Detektor jeweils bei mehrmalig nacheinander erfolgendem Auftreffen des rotierenden Laserstrahls erzeugten Ausgangssignalen.

Insbesondere kann dabei das Variieren des Emittierens des rotierenden Laserstrahls - zum Erzeugen des Emissionsmusters - zeitlich mit der Umdrehungsdauer des rotierenden Laserstrahls gekoppelt erfolgen und dadurch zumindest in Richtung des Laserempfängers das Emissionsmuster über eine Folge von Umdrehungen des rotierenden Laserstrahls erzeugt werden.

Die bezüglich des erfindungsgemässen Konstruktionslasersystems oben beschriebenen Weiterbildungen und vorteilhaften Aspekte sind - wie es sich für den Fachmann von selbst erklärt - analog auch auf den erfindungsgemässen Rotationslaser, auf den erfindungsgemässen Laserempfänger sowie auf das erfindungsgemässe Verfahren übertragbar und anwendbar.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: schematisch eine Baustellensituation, in der die Erfindung zum Einsatz gebracht wird; und
- Fig. 2: Beispiele für verschiedene Emissionsmuster, die erfindungsgemäß angewendet werden.

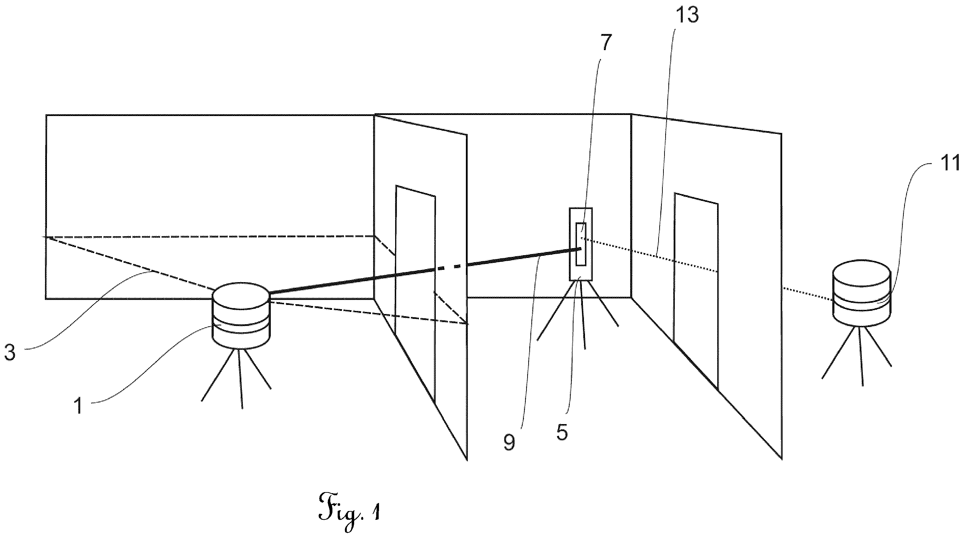

Aus Figur 1 ist eine Situation ersichtlich, in der ein erfindungsgemässes Konstruktionslasersystem zum Einsatz kommt. In einem ersten Raum eines Gebäudes befindet sich ein Rotationslaser 1, in dem ein Umlenkprisma mit einer festgelegten Drehzahl rotiert. Ein auf das Umlenkprisma einfallender Laserstrahl wird durch dieses als Laserbezugsebene 3 ausbildet. Die Laserbezugsebene schneidet die Wände des Raums, in dem der Rotationslaser aufgestellt ist. Die Schnittlinien werden auf den Wänden in Form von Bezugslinien sichtbar und dienen als Basis um z.B. Leitungsinstallationen durchzuführen, Bilder aufzuhängen, Möbel anzuordnen usw.

In einem Nebenraum ist ein Laserempfänger 3 angeordnet. Dieser dient dazu, mittels eines digitalen Laserlichtsensors 7 einen Laserstrahl bzw. Laserimpuls 9, der in der Laserbezugsebene 3 liegt, zu erfassen und zu verstärken, um in dem Nebenraum eine der Laserbezugsebene 3 entsprechende Bezugsebene auszubilden (die allerdings zur Vermeidung von Unklarheiten in der Figur 1 nicht dargestellt ist). Da außerdem derartige Laserempfänger und ein entsprechendes Verfahren bereits in der Druckschrift EP 2 199 739 A1 beschrieben sind, wird eine ausführliche Erläuterung an dieser Stelle nicht mehr vorgenommen.

Wie weiters aus Figur 1 ersichtlich ist, befindet sich in einem weiteren Nebenraum ein zweiter Rotationslaser 11, der ebenfalls eine Laserbezugsebene ausbildet, von der in Figur 1 lediglich ein Laserstrahl 13 bzw. Laserimpuls 13 dargestellt ist. Dieser Laserstrahl 13 fällt ebenfalls regelmäßig entsprechend der Drehzahl des Umlenkprismas des zweiten Rotationslasers 11 auf den Laserlichtsensor 7 des Laserempfängers 5.

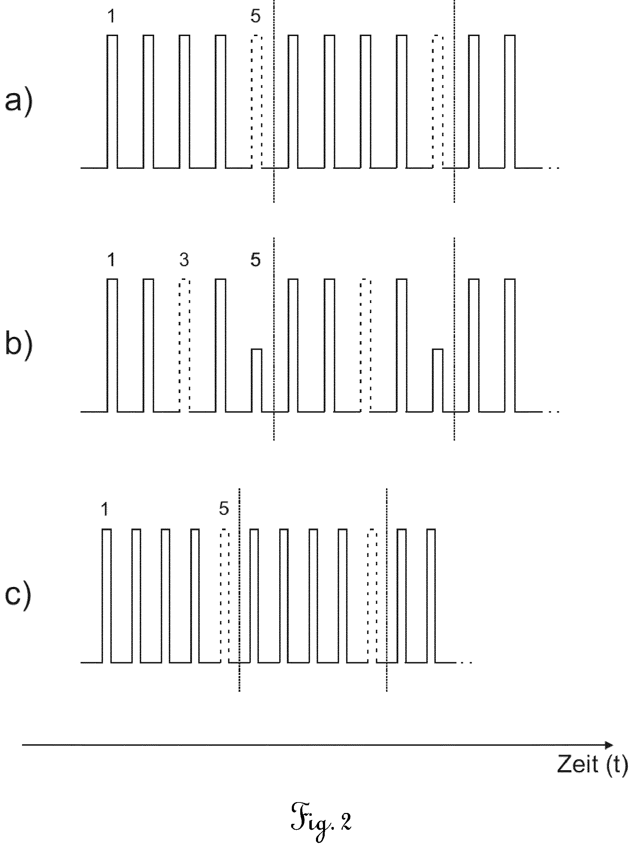

Vor der Anordnung des Laserempfängers 5 in dem Nebenraum wurde der Laserempfänger 5 auf ein von dem Rotationslaser 1 abgegebenes Muster eingestellt. Der Laserimpuls 9 von dem Rotationslaser 1 fällt nämlich entsprechend der Drehzahl des Umlenkprismas in dem Rotationslaser 1 in regelmäßigen Abständen auf den Laserlichtsensor 7. Außerdem wird gemäß einem bevorzugten Ausführungsbeispiel jeder fünfte Impuls unterbrochen, indem während jeder fünften Umdrehung des Umlenkprismas der Laserstrahl abgeschaltet wird. Dieses Muster ist schematisch in Figur 2a dargestellt. Vertikale Punktlinien in Figuren 2a bis 2c stellen eine Begrenzung der dort dargestellten Muster da.

Da das Muster in dem Laserempfänger 5 gespeichert ist, ist dieser in der Lage, zu erkennen, ob es sich bei einem einfallenden Laserimpuls um den Laserimpuls 9 von dem Rotationslaser 1 oder um den Laserimpuls 13 von dem zweiten Rotationslaser 11 handelt, der auf eine andere Drehzahl und ein anderes Muster eingestellt ist, als der Rotationslaser 1.

In bestimmten Fällen kann es aber erforderlich sein, dass der Laserempfänger in der Lage ist, die Impulse von zwei unterschiedlichen Rotationslasern 1 und 11 zu erkennen und zu verarbeiten. In einem derartigen Fall, ist es gemäß einer Abänderung der Ausführungsform möglich, die beiden unterschiedlichen Muster der beiden Rotationslaser 1, 11 zu speichern. Eine Unterscheidung der einzelnen Muster kann einerseits durch den Zeitpunkt erfolgen, in dem die Laserimpulse 9 und 13 auftreffen, oder andererseits auch durch den Bereich des Laserlichtsensors 7, in dem die Laserimpulse 9 und 13 auftreffen, wodurch unterschiedliche elektrische Ausspeisungen entstehen, die mit den gespeicherten Mustern verglichen werden.

Als Beispiel für unterschiedliche Zeitdauern eines Musters sei beispielhaft auf die Figuren 2a und 2c verwiesen, die das gleiche Muster zeigen, in dem jeder fünfte Impuls unterdrückt ist. Allerdings unterscheiden sich die beiden Muster hinsichtlich der Drehzahlen der Umlenkprismen, weshalb die Impulse zu unterschiedlichen Zeiten an dem Laserempfänger 5 eintreffen. Da die jeweiligen Zeitpunkte in dem Laserempfänger gespeichert sind, ist eine sichere Zuordnung der jeweiligen Impulse 9 und 13 zu den Rotationslasern 1 und 11 gewährleistet.

Da die Rotationslaser in einem Drehzahlbereich zwischen z.B. 7 und 20 Umdrehungen pro Sekunde (7 bis 20 U/s) operieren können, befinden sich die Impulsabstände etwa im Zehntelsekundenbereich. Die Impulsdauer selbst, d.h. der Zeitraum während dem der Impuls auf den Laserlichtsensor fällt, befindet sich bei einer Drehzahl des Umlenkprismas von 10 U/s dabei in einem Bereich von ca. 5 Mikrosekunden (5 µs). Daher können die unterschiedlichen Impulse durch einfache Änderung der Drehzahl der Umlenkprismen und die unterschiedlichen Muster mittels einfachen technischen Mitteln - wie z.B. Vorprogrammierung von einigen unterschiedlichen, später benutzerseitig auswählbaren Mustern in der Gerätesoftware - verwirklicht werden. Zudem kann auch erst kurz vor Benutzung die Eingabe eines definierten, gewünschten Emissionsmusters erfolgen.

Die erfindungsgemässe Gerätekombination aus Rotationslaser und Laserempfänger bietet somit eine hohe Flexibilität auch bei - z.B. ausfallbedingtem - Ersatz von Empfänger oder Rotationslaser einer Gerätekombination sowie in der hohen Modularität bzw. Kombinierbarkeit/Erweiterbarkeit mit weiteren Komponenten anderer ähnlicher Gerätekombinationen, und dabei dennoch eine eindeutige Zuordnungsmöglichkeit von jeweils zwei Komponenten bzw. die empfängerseitige Identifikation eines speziellen, ausgewählten Rotationslasers zu gewährleisten. Zudem kann erfindungsgemäss nun auch kurzfristig auf bestimmte Gegebenheiten (z.B. auf einer Baustelle vor Ort und die dort bereits vorhandenen und eingesetzten Gerätschaften) reagiert werden.

Im Speziellen wird also auf einfache Weise ermöglicht, erst kurz vor Einsatz der Geräte diese auf benutzerfreundliche Weise gegenseitig aufeinander einzustimmen (d.h. eine eindeutige Zusammenarbeit der Gerätekombination zu bewirken), ohne dass dafür eine vordefinierte und Modularität verunmöglichende hardwareseitige Abstimmung diverser Bauteile der beiden zusammenwirkenden Geräte aufeinander erforderlich ist (z.B. hinsichtlich der Wellenlänge oder der Modulationsweise des Laserstrahls mit entsprechender hardwareseitiger Auslegung der senderseitigen Laserquelle bzw. des empfängerseitigen Laserstrahl-Detektors).

Eine andere Möglichkeit, unterscheidbare Muster zu erzeugen, besteht darin, anstelle einen oder mehrere Impulse vollständig ausfallen zu lassen, einen oder mehrere Impulse hinsichtlich ihrer Signalamplitude zu verstärken oder abzuschwächen. Beispielhaft sei hier auf Figur 2b verwiesen. In der Figur 2b ist die Signalamplitude des fünften Impulses um ca. 50% abgeschwächt, während der dritte Impuls jedes Musters vollständig unterbunden ist.

Die Erfindung ist allerdings nicht auf das beispielhaft dargestellte Konstruktionslasersystem und insbesondere nicht auf die dargestellten Muster beschränkt. Insbesondere kann ein Muster mehr als fünf Impulse aufweisen. Dies kann so weit gehen, dass ein Muster erst über mehrere Umdrehungen des Umlenkprismas definiert ist.

Ebenfalls kann ein Muster lediglich aus abgeschwächten Impulsen bestehen. Diese können gleich oder unterschiedlich stark abgeschwächt sein, z.B. in einem Rahmen von 25% bis 75% der Signalamplitude.

Ein Konstruktionslasersystem gemäß der Erfindung ist auch nicht auf eine bestimmte Zahl von Geräten beschränkt, es können insbesondere auch mehrere Laserempfänger einem Rotationslaser zugeordnet sein oder auch mehrere Rotationslaser einem oder mehreren Laserempfängern zugeordnet sein.

Die Übertragung des Musters von dem Rotationslaser zu dem Laserempfänger kann auch in einer kodierten Weise erfolgen.

Da ein digitaler Laserempfänger eingesetzt wird, ist es auch möglich, die Muster verschiedener Rotationslaser zu unterschiedlichen Einfallspunkten, zum Beispiel an einer unterschiedlichen Höhe derselben, zu erkennen.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Konstruktionslasersystem aus mindestens
• einem eine Lasereinheit und ein rotierbares Umlenkmittel aufweisenden Rotationslaser zur Emission eines rotierenden Laserstrahls, wobei der rotierende Laserstrahl eine Referenzfläche definiert,
• einem Laserempfänger zur Bestimmung einer Position relativ zur Referenzfläche, mit einem Laserstrahl-Detektor, der ausgebildet ist zur Erzeugung eines Ausgangssignals bei Auftreffen des Laserstrahls auf dem Laserstrahl-Detektor,
• einer Auswerteeinheit zur Ermittlung der Position des Laserempfängers relativ zur Referenzfläche, und
• einen Indikator für die ermittelte Position, insbesondere ausgebildet zur Indikation, ob das Laserempfänger mit der Referenzfläche exakt koinzidiert,
**gekennzeichnet durch**
• eine derart ausgebildete Steuerung für die Lasereinheit, dass **durch** eine zeitlich mit der Umdrehungsdauer des Umlenkmittels gekoppelte Variation der Emission des Laserstrahls ein bekanntes Emissionsmuster über eine Folge von mehreren Umdrehungen erzeugt wird, und **dadurch**, dass
• die Auswerteeinheit ausgebildet ist zur Identifikation der Referenzfläche anhand einer mit dem bekannten Emissionsmuster korrespondierenden Folge von **durch** den Laserstrahl-Detektor jeweils bei mehrmalig nacheinander erfolgendem Auftreffen des rotierenden Laserstrahls erzeugten Ausgangssignalen.

2. Konstruktionslasersystem nach Anspruch 1,
**dadurch gekennzeichnet, dass**
die Auswerteeinheit ausgebildet ist zum Vergleich von der Folge von erzeugten Ausgangssignalen mit durch das bekannte Emissionsmuster gekennzeichneten Vergleichskriterien, insbesondere wobei die Vergleichskriterien in der Auswerteeinheit gespeichert sind.

3. Konstruktionslasersystem nach Anspruch 1 oder 2,
**dadurch gekennzeichnet, dass**
der rotierende Laserstrahl in einem von der Umdrehungsdauer des Umlenkmittels abhängigen Auftreff-Rhythmus auf dem Laserempfänger auftrifft und die Steuerung derart zur Variation der Emission des Laserstrahls ausgebildet ist, dass - als das bekannte Emissionsmuster - im Rahmen des Auftreff-Rhythmus bei jedem n-ten Auftreffen des rotierenden Laserstrahls auf dem Laserempfänger ein Ausgangssignal durch den Laserstrahl-Detektor erzeugt wird, welches sich von den im Rahmen des Auftreff-Rhythmus restlichen erzeugten Ausgangssignalen unterscheidet.

4. Konstruktionslasersystem nach einem der Ansprüche 1 bis 3,
**dadurch gekennzeichnet, dass**
• die Steuerung derart ausgebildet ist, dass - als das bekannte Emissionsmuster - der Laserstrahl bei jeder n-ten Umdrehung für die Dauer von einer Umdrehung mit einer ausserhalb eines definierten Standardlichtleistungsbereichs liegenden Lichtleistung oder gar nicht emittiert wird, insbesondere wobei n ganzzahlig zwischen 3 und 10 gewählt ist,
im Speziellen wobei für den Fall, dass der Laserstrahl bei jeder n-ten Umdrehung mit einer ausserhalb des Standardlichtleistungsbereichs liegenden Lichtleistung emittiert wird, dieser bei jeder n-ten Umdrehung mit einer den Standardlichtleistungsbereich deutlich unterschreitenden Lichtleistung emittiert wird, und
• die Auswerteeinheit ausgebildet ist zur Identifikation der Referenzfläche daran, dass bei der Folge von Ausgangssignalen jedes n-te Ausgangssignal eine sich von den Amplituden der sonstigen Ausgangssignale unterscheidende Amplitude aufweist bzw. dass bei der Folge von Ausgangssignalen jedes n-te Ausgangssignal ausbleibt.

5. Konstruktionslasersystem nach Anspruch 4,
**dadurch gekennzeichnet, dass**
die Steuerung derart ausgebildet ist, dass der Laserstrahl bei den sonstigen Umdrehungen ausser bei der jeden n-ten Umdrehung - d.h. für die Dauer von diesen sonstigen Umdrehung - mit einer innerhalb des Standardlichtleistungsbereichs liegenden Lichtleistung emittiert wird, insbesondere wobei der Laserstrahl bei den sonstigen Umdrehungen mit konstanter Lichtleistung als Standardlichtleistung emittiert wird.

6. Konstruktionslasersystem nach einem der Ansprüche 1 bis 5,
**dadurch gekennzeichnet, dass**
• die Umdrehungsrate des Umlenkmittels wahlweise auf verschiedene Werte innerhalb eines Drehratenbereichs zwischen 7 und 20 Umdrehungen pro Sekunde einstellbar ist, und
• die Auswerteeinheit ausgebildet ist zur weiteren Identifikation der Referenzfläche zusätzlich anhand der Zeitabstände der einzelnen Ausgangssignale innerhalb der Folge von erzeugten Ausgangssignalen.

7. Konstruktionslasersystem nach einem der Ansprüche 1 bis 6,
**dadurch gekennzeichnet, dass**
die Auswerteeinheit eine Lernfunktionalität bereitstellt, mit der
• eine mit dem Emissionsmuster korrespondierende Einlern-Folge von durch den Laserstrahl-Detektor jeweils bei mehrmalig nacheinander erfolgendem Auftreffen des rotierenden Laserstrahls erzeugten Ausgangssignalen erfassbar und analysierbar ist und
• aus der Einlern-Folge Vergleichskriterien derart ableitbar sind, dass diese durch das Emissionsmuster gekennzeichnet und zum Verglichenwerden mit einer Folge von im Rahmen eines späteren Messvorgangs erzeugten Ausgangssignalen ausgelegt sind,
• insbesondere wobei - als die Vergleichskriterien - Informationen bezüglich periodisch wiederkehrender Unterschiede in den Amplituden der einzelnen Ausgangssignale innerhalb der Einlern-Folge ableitbar und abspeicherbar sind.

8. Konstruktionslasersystem nach einem der Ansprüche 1 bis 7,
**dadurch gekennzeichnet, dass**
• der Indikator derart ausgebildet ist, dass nur im Fall der Identifikation der Referenzfläche die ermittelte Position des Laserempfängers relativ zu dieser Referenzfläche angezeigt wird, und/oder
• der Indikator ausgebildet ist zur Anzeige, ob die Referenzfläche identifiziert wurde.

9. Konstruktionslasersystem nach einem der Ansprüche 1 bis 8,
**dadurch gekennzeichnet, dass**
• als die Position des Laserempfängers relativ zur Referenzfläche durch die Auswerteeinheit die Information ermittelbar ist, ob sich ein definierter Nullpunkt des Laserempfängers
□ exakt auf Höhe der Referenzfläche,
□ oberhalb der Referenzfläche oder
□ unterhalb der Referenzfläche
befindet, und
• diese Information als die ermittelte Position durch den Indikator anzeigbar ist.

10. Konstruktionslasersystem nach einem der Ansprüche 1 bis 9,
**dadurch gekennzeichnet, dass**
• der Laserstrahl-Detektor eine Vielzahl von photosensitiven Elementen aufweist und/oder dadurch, dass
• die Auswerteeinheit und der Indikator in den Laserempfänger und
• die Steuerung in den Rotationslaser integriert sind.

11. Rotationslaser für ein Konstruktionslasersystem nach einem der Ansprüche 1 bis 10, das eine Lasereinheit und ein rotierbares Umlenkmittel aufweist und ausgebildet ist zur Emission eines rotierenden Laserstrahls, wobei der rotierende Laserstrahl eine Referenzfläche definiert,
**gekennzeichnet durch**
eine derart ausgebildete Steuerung für die Lasereinheit, dass **durch** eine zeitlich mit der Umdrehungsdauer des Umlenkmittels gekoppelte Variation der Emission des Laserstrahls ein bekanntes Emissionsmuster über eine Folge von mehreren Umdrehungen erzeugt wird, sodass anhand einer mit dem bekannten Emissionsmuster korrespondierenden Folge von durch einen Laserstrahl-Detektor eines Laserempfängers jeweils bei mehrmalig nacheinander erfolgendem Auftreffen des rotierenden Laserstrahls erzeugten Ausgangssignalen die Referenzfläche **durch** eine Auswerteeinheit des Konstruktionslasersystems identifizierbar ist.

12. Laserempfänger, insbesondere haldhaltbar, für ein Konstruktionslasersystem nach einem der Ansprüche 1 bis 10, der ausgebildet ist zur Bestimmung einer Position relativ zu einer durch einen rotierenden Laserstrahl definierten Referenzfläche und aufweist
• einen eine Vielzahl von photosensitiven Elementen aufweisenden Laserstrahl-Detektor, der ausgebildet ist zur Erzeugung eines Ausgangssignals bei Auftreffen des Laserstrahls auf dem Laserstrahl-Detektor,
• einer Auswerteeinheit zur Ermittlung der Position des Laserempfängers relativ zur Referenzfläche, und
• einen Indikator für die ermittelte Position, insbesondere ausgebildet zur Indikation, ob der Laserempfänger mit der Referenzfläche exakt koinzidiert,
**dadurch gekennzeichnet, dass**
die Auswerteeinheit ausgebildet ist zur Identifikation der Referenzfläche anhand einer mit einem - durch Variation der Emission des rotierenden Laserstrahls über eine Folge von mehreren Umdrehungen erzeugten - bekannten Emissionsmuster korrespondierenden Folge von durch den Laserstrahl-Detektor jeweils bei mehrmalig nacheinander erfolgendem Auftreffen des rotierenden Laserstrahls erzeugten Ausgangssignalen.

13. Verfahren zum Bestimmen einer Position von einem Laserempfänger relativ zu einer Referenzfläche, insbesondere zum Indizieren, ob der Laserempfänger mit der Referenzfläche exakt koinzidiert,
mit den Schritten
• Emittieren eines rotierenden Laserstrahls, wobei der rotierende Laserstrahl die Referenzfläche definiert,
• Detektieren des Laserstrahls anhand eines Laserstrahl-Detektors des Laserempfängers und Erzeugen eines Ausgangssignals bei Auftreffen des Laserstrahls auf dem Laserstrahl-Detektor,
• Ermitteln der Position des Laserempfängers relativ zur Referenzfläche, und
• Indizieren der ermittelten Position, insbesondere wobei indiziert wird, ob ein definierter Nullpunkt des Laserempfängers mit der Referenzebene koinzidiert,
**gekennzeichnet durch** die Schritte
• Variieren des Emittierens des rotierenden Laserstrahls derart, dass **dadurch** zumindest in Richtung des Laserempfängers ein bekanntes Emissionsmuster über eine Folge von Umdrehungen des rotierenden Laserstrahls erzeugt wird, und
• Identifizieren der Referenzfläche anhand einer mit dem bekannten Emissionsmuster korrespondierenden Folge von **durch** den Laserstrahl-Detektor jeweils bei mehrmalig nacheinander erfolgendem Auftreffen des rotierenden Laserstrahls erzeugten Ausgangssignalen, insbesondere **durch** Vergleich von der Folge von erzeugten Ausgangssignalen mit **durch** das bekannte Emissionsmuster gekennzeichneten Vergleichskriterien.

14. Verfahren nach Anspruch 13,
**dadurch gekennzeichnet, dass**
das Variieren des Emittierens des rotierenden Laserstrahls - zum Erzeugen des Emissionsmusters - zeitlich mit der Umdrehungsdauer des rotierenden Laserstrahls gekoppelt erfolgt und dadurch zumindest in Richtung des Laserempfängers das Emissionsmuster über eine Folge von Umdrehungen des rotierenden Laserstrahls erzeugt wird.

15. Verfahren nach Anspruch 13 oder 14,
**dadurch gekennzeichnet, dass**
der rotierende Laserstrahl in einem von der Umdrehungsdauer des Umlenkmittels abhängigen Auftreff-Rhythmus auf dem Laserempfänger auftrifft und das Variieren des Emittierens des Laserstrahls derart erfolgt, dass - als das bekannte Emissionsmuster - im Rahmen des Auftreff-Rhythmus bei jedem n-ten Auftreffen des rotierenden Laserstrahls auf dem Laserempfänger ein Ausgangssignal durch den Laserstrahl-Detektor erzeugt wird, welches sich von den im Rahmen des Auftreff-Rhythmus restlichen erzeugten Ausgangssignalen unterscheidet.

## Claims

1. A construction laser system comprising at least
• a rotation laser having a laser unit and a rotatable deflection means and serving for emitting a rotating laser beam, wherein the rotating laser beam defines a reference surface,
• a laser receiver for determining a position relative to the reference surface, having a laser beam detector designed for generating an output signal when the laser beam impinges on the laser beam detector,
• an evaluation unit for determining the position of the laser receiver relative to the reference surface, and
• an indicator for the position determined, in particular designed for indicating whether the laser receiver exactly coincides with the reference surface,
**characterized by**
• a controller for the laser unit, which controller is designed in such a way that a known emission pattern is generated over a sequence of a plurality of revolutions by varying the emission of the laser beam in a manner temporally coupled to the revolution duration of the deflection means, and in that
• the evaluation unit is designed for identifying the reference surface on the basis of a sequence of output signals generated by the laser beam detector in each case when the rotating laser beam repeatedly successively impinges, which sequence corresponds to the known emission pattern.

2. The construction laser system as claimed in claim 1,
**characterized in that**
the evaluation unit is designed for comparing the sequence of output signals generated with comparison criteria indicated by the known emission pattern, in particular wherein the comparison criteria are stored in the evaluation unit.

3. The construction laser system as claimed in claim 1 or 2,
**characterized in that**
the rotating laser beam impinges on the laser receiver in an impinging rhythm dependent on the revolution duration of the deflection means and the controller is designed for varying the emission of the laser beam in such a way that - as the known emission pattern - in the context of the impinging rhythm upon every n-th impingement of the rotating laser beam on the laser receiver an output signal is generated by the laser beam detector, which signal differs from the remaining output signals generated in the context of the impinging rhythm.

4. The construction laser system as claimed in any one of claims 1 to 3,
**characterized in that**
• the controller is designed in such a way that - as the known emission pattern - the laser beam, upon every n-th revolution, for the duration of one revolution, is emitted with a light power lying outside a defined standard light power range or is not emitted at all, in particular wherein n is chosen to be an integer between 3 and 10,
specifically wherein, for the case in which the laser beam is emitted with a light power lying outside the standard light power range upon every n-th revolution, said laser beam is emitted with a light power that significantly falls below the standard light power range upon every n-th revolution, and
• the evaluation unit is designed for identifying the reference surface from the fact that in the sequence of output signals every n-th output signal has an amplitude that differs from the amplitudes of the other output signals, or that every n-th output signal fails to appear in the sequence of output signals.

5. The construction laser system as claimed in claim 4,
**characterized in that**
the controller is designed in such a way that the laser beam is emitted with a light power lying within the standard light power range upon the other revolutions apart from upon the every n-th revolution - i.e. for the duration of these other revolution -, in particular wherein the laser beam is emitted with constant light power as standard light power upon the other revolutions.

6. The construction laser system as claimed in any of claims 1 to 5,
**characterized in that**
• the revolution rate of the deflection means can optionally be set to different values within a rotation rate range of between 7 and 20 revolutions per second, and
• the evaluation unit is designed for further identifying the reference surface additionally on the basis of the time intervals between the individual output signals within the sequence of output signals generated."

7. The construction laser system as claimed in any one of claims 1 to 6,
**characterized in that**
the evaluation unit provides a learning functionality with which
• a learning sequence - corresponding to the emission pattern - of output signals generated by the laser beam detector in each case when the rotating laser beam repeatedly successively impinges can be detected and can be analyzed, and
• comparison criteria can be derived from the learning sequence in such a way that they are indicated by the emission pattern and designed for being compared with a sequence of output signals generated in the context of a later measurement operation,
• in particular wherein - as the comparison criteria - information regarding periodically recurring differences in the amplitudes of the individual output signals within the learning sequence can be derived and can be stored.

8. The construction laser system as claimed in any one of claims 1 to 7,
**characterized in that**
• the indicator is designed in such a way that it is only in the case of the identification of the reference surface that the determined position of the laser receiver relative to said reference surface is indicated, and/or
• the indicator is designed for indicating whether the reference surface has been identified.

9. The construction laser system as claimed in any one of claims 1 to 8,
**characterized in that**
• as the position of the laser receiver relative to the reference surface, it is possible, by means of the evaluation unit, to determine the information of whether a defined zero point of the laser receiver is situated
□ exactly at the level of the reference surface,
□ above the reference surface or
□ below the reference surface,
and
• said information can be indicated as the determined position by the indicator.

10. The construction laser system as claimed in any one of claims 1 to 9,
**characterized in that**
• the laser beam detector has a multiplicity of photosensitive elements,
and/or **in that**
• the evaluation unit and the indicator are integrated into the laser receiver, and
• the controller is integrated into the rotation laser.

11. A rotation laser for a construction laser system as claimed in any one of claims 1 to 10, said system having a laser unit and a rotatable deflection means and being designed for emitting a rotating laser beam, wherein the rotating laser beam defines a reference surface,
**characterized by**
a controller for the laser unit, which controller
is designed in such a way that a known emission pattern is generated over a sequence of a plurality of revolutions by varying the emission of the laser beam in a manner temporally coupled to the revolution duration of the deflection means, such that on the basis of a sequence of output signals generated by a laser beam detector of a laser receiver in each case when the rotating laser beam repeatedly successively impinges, which sequence corresponds to the known emission pattern, the reference surface can be identified by an evaluation unit of the construction laser system.

12. A laser receiver, in particular capable of being handheld, for a construction laser system as claimed in any one of claims 1 to 10, said laser receiver being designed for determining a position relative to a reference surface defined by a rotating laser beam, and having
• a laser beam detector having a multiplicity of photosensitive elements and being designed for generating an output signal where the laser beam impinges on the laser beam detector,
• an evaluation unit for determining the position of the laser receiver relative to the reference surface, and
• an indicator for the position determined, in particular designed for indicating whether the laser receiver exactly coincides with the reference surface,
**characterized in that**
the evaluation unit is designed for identifying the reference surface on the basis of a sequence of output signals generated by the laser beam detector in each case when the rotating laser beam repeatedly successively impinges, which sequence corresponds to a known emission pattern - generated by varying the emission of the rotating laser beam over a sequence of a plurality of revolutions.

13. A method for determining a position of a laser receiver relative to a reference surface, in particular for indicating whether the laser receiver exactly coincides with the reference surface,
comprising the steps of
• emitting a rotating laser beam, wherein the rotating laser beam defines the reference surface,
• detecting the laser beam with the aid of a laser beam detector of the laser receiver, and generating an output signal when the laser beam impinges on the laser beam detector,
• determining the position of the laser receiver relative to the reference surface, and
• indicating the position determined, in particular indicating whether a defined zero point of the laser receiver coincides with the reference plane,
**characterized by** the steps of
• varying the emitting of the rotating laser beam in such a way that as a result at least in the direction of the laser receiver a known emission pattern is generated over a sequence of revolutions of the rotating laser beam, and
• identifying the reference surface on the basis of a sequence of output signals generated by the laser beam detector in each case when the rotating laser beam repeatedly successively impinges, which sequence corresponds to the known emission pattern, in particular by comparing the sequence of output signals generated with comparison criteria indicated by the known emission pattern.

14. The method as claimed in claim 13,
**characterized in that**
varying the emitting of the rotating laser beam - for the purpose of generating the emission pattern
- is effected in a manner coupled temporally to the revolution duration of the rotating laser beam and as a result at least in the direction of the laser receiver the emission pattern is generated over a sequence of revolutions of the rotating laser beam.

15. The method as claimed in claim 13 or 14,
**characterized in that**
the rotating laser beam impinges on the laser receiver in an impinging rhythm dependent on the revolution duration of the deflection means and varying the emitting of the laser beam is effected in such a way that - as the known emission pattern - in the context of the impinging rhythm upon every n-th impingement of the rotating laser beam on the laser receiver an output signal is generated by the laser beam detector, which signal differs from the remaining output signals generated in the context of the impinging rhythm.

## Revendications

1. Système laser de construction constitué par au moins
• un laser de rotation qui présente une unité laser et un moyen de déviation rotatif pour l'émission d'un faisceau laser rotatif, cependant que le faisceau laser rotatif définit une surface de référence,
• un récepteur laser pour déterminer une position par rapport à la surface de référence, avec un détecteur de faisceau laser qui est configuré pour générer un signal de sortie lors de l'impact du faisceau laser sur le détecteur de faisceau laser,
• une unité d'évaluation pour déterminer la position du récepteur laser par rapport à la surface de référence et
• un indicateur pour la position déterminée, en particulier configuré pour l'indication si le récepteur laser coïncide exactement avec la surface de référence,
**caractérisé par**
• une commande configurée de telle manière pour l'unité laser qu'un modèle d'émission connu est généré pendant une séquence de plusieurs rotations par une variation de l'émission du faisceau laser couplée temporellement à la durée de rotation,
et **caractérisé en ce que**
• l'unité d'évaluation est configurée pour l'identification de la surface de référence à l'aide d'une séquence de signaux de sortie qui correspond au modèle d'émission connu qui sont générés par le détecteur de faisceau laser respectivement lors de l'impact du faisceau laser en rotation qui a lieu plusieurs fois successives.

2. Système laser de construction selon la revendication 1, **caractérisé en ce que** l'unité d'évaluation est configurée pour la comparaison de la séquence de signaux de sortie générés avec des critères de comparaison **caractérisés par** le modèle d'émission connu, en particulier cependant que les critères de comparaison sont mémorisés dans l'unité d'évaluation.

3. Système laser de construction selon la revendication 1 ou 2, **caractérisé en ce que** le faisceau laser rotatif frappe sur le récepteur laser dans un rythme d'impact qui dépend de la durée de rotation du moyen de déviation et que la commande est configurée pour la variation de l'émission du faisceau laser de telle manière - qu'en tant que modèle d'émission connu - dans le cadre du rythme d'impact, un signal de sortie est généré par le détecteur de faisceau laser pour chaque n-ième impact du faisceau laser rotatif sur le récepteur laser, signal de sortie qui se distingue des autres signaux de sortie générés dans le cadre du rythme d'impact.

4. Système laser de construction selon l'une des revendications 1 à 3, **caractérisé en ce que**
• la commande est configurée de telle manière - qu'en tant que modèle d'émission connu - le faisceau laser est émis ou n'est pas émis du tout pour chaque n-ième rotation pour la durée d'une rotation avec une puissance lumineuse qui se situe en dehors d'une gamme de puissance lumineuse standard définie, en particulier cependant que n est choisi entier entre 3 et 10, en particulier cependant qu'au cas où le faisceau laser est émis pour chaque n-ième rotation avec une puissance lumineuse qui se situe en dehors de la gamme de puissance lumineuse standard celui-ci est émis, pour chaque n-ième rotation avec une puissance lumineuse qui est nettement en dessous de la gamme de puissance lumineuse standard et
• l'unité d'évaluation est configurée pour l'identification de la surface de référence **en ce que**, pour la séquence de signaux de sortie, chaque n-ième signal de sortie présente une amplitude qui se distingue des amplitudes des autres signaux de sortie ou que, pour la séquence de signaux de sortie, chaque n-ième signal de sortie est supprimé.

5. Système laser de construction selon la revendication 4, **caractérisé en ce que** la commande est configurée de telle manière que le faisceau laser est émis pour les autres rotations à l'exception de chaque n-ième rotation - c'est-à-dire pour la durée de ces autres rotations - avec une puissance lumineuse qui se situe à l'intérieur de la gamme de puissance lumineuse standard, en particulier cependant que le faisceau laser est émis, pour les autres rotations, avec une puissance lumineuse constante comme gamme de puissance lumineuse standard.

6. Système laser de construction selon l'une des revendications 1 à 5, **caractérisé en ce que**
• la vitesse de rotation du moyen de déviation est réglable au choix sur différentes valeurs à l'intérieur d'une gamme de vitesses de rotation entre 7 et 20 rotations par seconde et
• l'unité d'évaluation est configurée pour l'identification supplémentaire de la surface de référence en plus à l'aide des intervalles de temps des différents signaux de sortie à l'intérieur de la séquence de signaux de sortie générés.

7. Système laser de construction selon l'une des revendications 1 à 6, **caractérisé en ce que** l'unité d'évaluation met à disposition une fonctionnalité d'apprentissage avec laquelle
• une séquence d'apprentissage de signaux de sortie générés par le détecteur de faisceau laser respectivement lors de l'impact du faisceau laser en rotation qui a lieu plusieurs fois successives, qui correspond au modèle d'émission, peut être détectée et peut être analysée et
• des critères de comparaison peuvent être dérivés de la séquence d'apprentissage de telle manière que ceux-ci sont **caractérisés par** le modèle d'émission et sont conçus pour être comparés avec une séquence de signaux de sortie générés dans le cadre d'un processus de mesure ultérieur,
• en particulier cependant - qu'en tant que critères de comparaison - des informations relatives aux différences qui se répètent périodiquement dans les amplitudes des différents signaux de sortie à l'intérieur de la séquence d'apprentissage peuvent être dérivées et mémorisées.

8. Système laser de construction selon l'une des revendications 1 à 7, **caractérisé en ce que**
• l'indicateur est configuré de telle manière que la position déterminée du récepteur laser par rapport à la surface de référence n'est affichée que dans le cas de l'identification de cette surface de référence et/ou
• l'indicateur est configuré pour afficher si la surface de référence a été identifiée.

9. Système laser de construction selon l'une des revendications 1 à 8, **caractérisé en ce que**
• l'information du récepteur laser si un point zéro défini du récepteur laser se trouve
□ exactement à hauteur de la surface de référence,
□ au-dessus de la surface de référence ou
□ au-dessous de la surface de référence
peut être déterminée par l'unité d'évaluation comme la position du récepteur laser par rapport à la surface de référence et
• cette information peut être affichée par l'indicateur comme la position déterminée.

10. Système laser de construction selon l'une des revendications 1 à 9, **caractérisé en ce que**
• le détecteur laser présente une multitude d'éléments photosensibles et/ou **en ce que**
• l'unité d'évaluation et l'indicateur sont intégrés dans le récepteur laser
et
• la commande dans le laser de rotation.

11. Laser de rotation pour un système laser de construction selon l'une des revendications 1 à 10 qui présente une unité laser et un moyen de déviation rotatif et pour l'émission d'un faisceau laser rotatif, cependant que le faisceau laser rotatif définit une surface de référence, **caractérisé par** une commande pour l'unité laser qui est configurée de telle manière qu'un modèle d'émission connu est généré par une variation de l'émission du faisceau laser qui est couplée temporellement avec la durée de rotation du moyen de déviation pendant une séquence de plusieurs rotations si bien que la surface de référence peut être identifiée par une unité d'évaluation du système laser de construction à l'aide d'une séquence de signaux de sortie, qui correspond au modèle d'émission connu, qui sont générés par un détecteur de faisceau laser d'un récepteur laser respectivement lors de l'impact du faisceau laser en rotation qui a lieu plusieurs fois successives.

12. Récepteur laser, en particulier portatif, pour un système laser de construction selon l'une des revendications 1 à 10 qui est configuré pour la détermination d'une position par rapport à une surface de référence définie par un faisceau laser rotatif et qui présente
• un détecteur de faisceau laser qui présente une multitude d'éléments photosensibles qui est configuré pour générer un signal de sortie lors de l'impact du faisceau laser sur le détecteur de faisceau laser,
• une unité d'évaluation pour déterminer la position du récepteur laser par rapport à la surface de référence et
• un indicateur pour la position déterminée, en particulier configuré pour l'indication si le récepteur laser coïncide exactement avec la surface de référence,
**caractérisé en ce que** l'unité d'évaluation est configurée pour l'identification de la surface de référence à l'aide d'une séquence de signaux de sortie, qui correspond au modèle d'émission connu, qui sont générés le détecteur de faisceau laser respectivement lors de l'impact du faisceau laser en rotation qui a lieu plusieurs fois successives - générés par la variation de l'émission du faisceau laser rotatif pendant une séquence de plusieurs rotations.

13. Procédé pour déterminer une position d'un récepteur laser par rapport à une surface de référence, en particulier pour l'indication si le récepteur laser coïncide exactement avec la surface de référence avec les étapes :
• émission d'un faisceau laser rotatif, le faisceau laser rotatif définissant la surface de référence,
• détection du faisceau laser à l'aide d'un détecteur de faisceau laser du récepteur laser et génération d'un signal de sortie lors de l'impact du faisceau laser sur le détecteur de faisceau laser,
• détermination de la position du récepteur laser par rapport à la surface de référence et
• indication de la position déterminée, en particulier cependant qu'il est indiqué si un point zéro défini du récepteur laser coïncide avec la surface de référence,
**caractérisé par** les étapes :
• variation de l'émission du faisceau laser rotatif de telle manière qu'un modèle d'émission connu est généré de ce fait au moins en direction du récepteur laser pendant une séquence de rotations du faisceau laser rotatif et
• identification de la surface de référence à l'aide d'une séquence de signaux de sortie, qui correspond au modèle d'émission connu, qui sont générés le détecteur de faisceau laser respectivement lors de l'impact du faisceau laser en rotation qui a lieu plusieurs fois successives, en particulier par comparaison de la séquence de signaux de sortie générés avec des critères de comparaisons **caractérisés par** le modèle d'émission connu.

14. Procédé selon la revendication 13, **caractérisé en ce que** la variation de l'émission du faisceau laser rotatif - pour générer le modèle d'émission - se fait en étant couplée temporellement avec la durée de rotation du faisceau laser rotatif et le modèle d'émission est généré de ce fait au moins en direction du récepteur laser pendant une séquence de rotations du faisceau laser rotatif.

15. Procédé selon la revendication 13 ou 14, **caractérisé en ce que** le faisceau laser rotatif frappe sur le récepteur laser dans un rythme d'impact qui dépend de la durée de rotation du moyen de déviation et que la variation de l'émission du faisceau laser de telle manière - qu'en tant que modèle d'émission connu - dans le cadre du rythme d'impact, un signal de sortie est généré par le détecteur de faisceau laser pour chaque n-ième impact du faisceau laser rotatif sur le récepteur laser, signal de sortie qui se distingue des autres signaux de sortie générés dans le cadre du rythme d'impact.
